# EUROPÄISCHE PATENTSCHRIFT

(11) **EP 3 970 915 B1**
(45) Veröffentlichungstag und Bekanntmachung des Hinweises auf die Patenterteilung: **15.02.2023**
(21) Anmeldenummer: 20197458.1
(22) Anmeldetag: 22.09.2020
(51) Int. Cl.: F16B 13/00, B25B 31/00, E04B 1/76

(54) **MONTAGEWERKZEUG UND VERFAHREN ZUR MONTAGE EINER DÄMMSTOFFPLATTE**
ASSEMBLY TOOL AND METHOD FOR MOUNTING AN INSULATING PANEL
OUTIL DE MONTAGE ET PROCÉDÉ DE MONTAGE D'UN PANNEAU ISOLANT

(43) Veröffentlichungstag der Anmeldung: 23.03.2022
(73) Patentinhaber: RANIT-Befestigungssysteme GmbH, 45701 Herten (DE)
(72) Erfinder: Giertulla, Roger, 44651 Herne (DE); Gräwe, Bernd, 45701 Herten (DE)
(74) Vertreter: Kohlmann, Kai

(56) Entgegenhaltungen:
- EP-A1- 3 536 459
- DE-A1- 2 807 606

## Beschreibung

Die Erfindung betrifft ein Montagewerkzeug zum Eintreiben einer Schraube in einen Tellerdübel für eine Befestigung einer Dämmstoffplatte an einer Unterkonstruktion. Außerdem betrifft die Erfindung ein Verfahren zur Montage einer Dämmstoffplatte an einer Unterkonstruktion mithilfe eines derartigen Montagewerkzeugs.

Es wird unterschieden zwischen rein geklebten Dämmstoffplatten und solchen, die geklebt und gedübelt sind. Bei rein geklebten Dämmstoffplatten trägt die Verklebung die Windlasten und das Eigengewicht der Dämmstoffplatten an der Unterkonstruktion ab. Bei geklebten und gedübelten Dämmstoffplatten werden die Dämmstoffplatten zunächst an die Unterkonstruktion geklebt und müssen anschließend gedübelt werden. Der Kleber sorgt für den Abtrag des Eigengewichts und die Dübel sind für den Abtrag der Windlasten vorgesehen.

Bei geklebten und gedübelten Dämmstoffplatten kommen als Dübelarten oberflächenbündige Tellerdübel, oberflächennah versenkte Tellerdübel, die mit einer Rondelle abgedeckt sind, und tiefenversenkte Dübel ohne Teller zum Einsatz, deren Dübelloch mit einem Stopfen ausgeschäumt ist (vgl. C. Maurer Fachmedien GmbH & Co. KG, Kundenauftrag / Wärmedämm-Verbundsysteme, Mappe 06/20, Seiten 40 -43).

Der oberflächenbündige Tellerdübel ist so zu setzen, dass der Dübelteller bündig zur Dämmstoffoberfläche sitzt.

Bei oberflächennah versenkten Tellerdübeln muss die Oberseite der Rondelle ebenfalls bündig mit der Oberfläche des Dämmstoffs abschließen.

Dübelteller bzw. Rondelle sollen weder überstehen noch zu tief sitzen. So kann der armierte Unterputz in einer gleichmäßigen Schichtdicke aufgetragen und das Risiko von Dübelabzeichnungen gering gehalten werden. Die Verwendung der vom Dübelhersteller vorgesehenen Montagewerkzeuge hilft, die Dübelung korrekt auszuführen.

Die EP 2 378 019 B1 offenbart ein Montagewerkzeug zur Montage einer Dämmstoffplatte an einer Unterkonstruktion mithilfe von oberflächennah versenkten Tellerdübeln, die mit einer Rondelle abgedeckt sind.

Die EP 3 536 459 A1 bildet den nächstliegenden Stand der Technik und offenbart ein Montagewerkzeug zur Montage einer Dämmstoffplatte an einer Unterkonstruktion mithilfe eines oberflächenbündigen Tellerdübels. Das Montagewerkzeug weist eine mit einer Antriebseinheit, beispielsweise einem Akkuschrauber, verbundene Antriebswelle, einen an der Antriebswelle befestigten Schraubendrehereinsatz zur Übertragung einer Drehbewegung der Antriebswelle auf den Kopf einer Schraube und eine an der Antriebswelle angeordnete Anschlagsscheibe auf. Um Abdrücke in dem relativ weichen Material der Dämmstoffplatte zu vermeiden, ist der Durchmesser der Anschlagscheibe im Verhältnis zum Kopf der Schraube relativ groß. Die Anschlagscheibe setzt beim Eintreiben der Schraube drehend auf der Oberfläche der zu verdübelnden Dämmstoffplatte auf und begrenzt eine weitere Vorwärtsbewegung des Montagewerkzeugs in Eintreibrichtung.

Eine weitere Drehung des Schraubendrehereinsatzes wird durch das Aufsetzen der Anschlagscheibe nicht unterbunden, so dass die Schraube weiter in die Unterkonstruktion bewegt wird. Der Kopf der Schraube liegt nun an einem Anschlag des Tellers des Tellerdübels an und bewirkt, dass auch der Teller des Tellerdübels in die Dämmstoffplatte hinein bewegt wird. Die Schraube bewegt sich dabei von dem Schraubendrehereinsatz weg, bis keine wirksame Verbindung mehr zwischen dem Mitnahmeprofil des Schraubendrehereinsatzes und der Antriebskontur des Schraubenkopfes besteht.

Nachteilig bei dem bekannten Montagewerkzeug ist, dass die tragenden Flächen der formschlüssigen Verbindung zwischen dem Mitnahmeprofil des Schraubendrehereinsatzes und der Antriebskontur des Schraubenkopfes trotz zunehmender Last beim Einschrauben der Schraube in den Tellerdübel kleiner werden. Durch die zum Ende des Eintreibvorgangs sehr kleine lasttragende Fläche kann die Antriebskontur des Schraubenkopfs beschädigt werden, was ein Lösen der Dübelverbindung im Bedarfsfall erheblich erschweren kann. Insbesondere führt die kleine lasttragende Fläche dazu, dass die wirksame Verbindung zwischen dem Mitnahmeprofil des Schraubendrehereinsatzes und der Antriebskontur des Schraubenkopfes beim Einschrauben der Schraube nicht exakt reproduzierbar gelöst werden kann. Eine exakt reproduzierbare Lösung der Verbindung ist jedoch erforderlich, um eine stets gleichbleibende Eindringtiefe des Tellers des Tellerdübels in die Dämmstoffplatte zu gewährleisten, insbesondere für eine oberflächenbündige Montage.

Ausgehend von diesem Stand der Technik liegt der Erfindung die Aufgabe zugrunde, ein Montagewerkzeug zum Eintreiben einer Schraube in einen Tellerdübel für eine Befestigung einer Dämmstoffplatte an einer Unterkonstruktion zu schaffen, bei dem eine stets gleichbleibende Eindringtiefe des Tellers des Tellerdübels in die Dämmstoffplatte gewährleistet ist, insbesondere für eine oberflächenbündige Montage. Zugleich soll die Handhabung des Montagewerkzeugs beim Ansetzen des Montagewerkzeugs an den Schraubenkopf der einzutreibenden Schraube vereinfacht werden.

Außerdem soll ein Verfahren zur Montage einer Dämmstoffplatte an einer Unterkonstruktion mit Hilfe des Montagewerkzeugs angegeben werden.

Diese Aufgabe wird durch ein Montagewerkzeug mit den Merkmalen des Anspruchs 1 und ein Verfahren zur Montage einer Dämmstoffplatte an einer Unterkonstruktion mit den Merkmalen des Anspruchs 14 gelöst. Vorteilhafte Ausgestaltungen der Erfindung ergeben sich aus den Unteransprüchen.

Der in Eintreibrichtung gegen die Kraft des Federelementes verschiebliche, nicht verdrehbare Innenkörper an dessen Vorderseite der Schraubendrehereinsatz befestigt ist, bewirkt, dass die formschlüssige Verbindung zwischen Mitnahmeprofil und der Antriebskontur des Schraubenkopfes vollflächig bis zur Beendigung des Eintreibens der Schraube aufrechterhalten wird.

Der verschiebliche Innenkörper mit Schraubendrehereinsatz erleichtert zudem im Zusammenwirken mit dem in dem Werkzeuggehäuse angeordneten Aufnahmeraum für den Schraubenkopf das Ansetzen des Montagewerkzeugs und verbessert damit dessen Handhabung.

Die gleichbleibende Eindringtiefe des Tellers des Tellerdübels in die Dämmstoffplatte wird exakt reproduzierbar durch die zwischen der Antriebswelle und dem Innenkörper angeordnete Rutschkupplung gewährleistet. Die Rutschkupplung als selbsttätig drehmomentschaltende Sicherheitskupplung trennt reproduzierbar aufgrund der beim Einschrauben zusätzlich wirkenden Reibkräfte zwischen der Oberfläche der Dämmstoffplatte und der Anschlagscheibe bei einem definierten Drehmoment. Hierdurch wird die stets gleichbleibende Eindringtiefe des Tellers des Tellerdübels in die Dämmstoffplatte gewährleistet.

Der Außenkörper der konzentrisch aufgebauten Rutschkupplung ist raumsparend in der Höhlung des Innenkörpers und das Nabenteil der Rutschkupplung an der Antriebswelle befestigt. Die Rutschkupplung benötigt durch diese Anordnung praktisch keinen zusätzlichen Bauraum, so dass das Montagewerkzeug kompakt baut und einfach handhabbar ist. Die Befestigung sowohl des Außenkörpers in der Höhlung des Innenkörpers als auch die Befestigung des Nabenteils an der Antriebswelle erfolgt derart, dass der Außenkörper das von der Rutschkupplung übertragene Drehmoment auf den Innenkörper und die Antriebswelle das von der Antriebsmaschine erzeugte Drehmoment auf das Nabenteil der Rutschkupplung überträgt. Zur drehmomentübertragenden Befestigung kann der Außenkörper beispielsweise in die Höhlung des Innenkörpers eingeklebt sein. Die Antriebswelle des Montagewerkzeuges kann mit dem Nabenteil mittels einer Schrauben-Klemmverbindung fest verbunden und -/oder verklebt sein.

Beim Ansetzen des Montagewerkzeugs nimmt der Aufnahmeraum den Schraubenkopf formschlüssig auf. Durch Ausüben eines Anpressdrucks in Eintreibrichtung auf die Antriebswelle, die beispielsweise mit einem Akkuschrauber verbunden ist, wird das Werkzeuggehäuse relativ zu dem Innenkörper gegen die Kraft des Federelementes verschoben. Dabei bewegt sich das Schrauben-Mitnahmeprofil durch den Durchgang zwischen Gehäusekammer und Aufnahmeraum bis das Schrauben-Mitnahmeprofil mit der Antriebskontur der Schraube in Eingriff steht.

Während des anschließenden Eintreibens bewegt sich die Schraube weiter in Richtung der Unterkonstruktion, bis die Anschlagscheibe auf der Oberfläche der Dämmstoffplatte aufsetzt. Um die Schraube weiter in Eintreibrichtung in die Dübelhülse einzudrehen, verschiebt sich der Innenkörper unter Aufrechterhaltung des Anpressdrucks in der Gehäusekammer, sodass sich das Schrauben-Mitnahmeprofil durch die Öffnung der Anschlagscheibe hindurchbewegt und schließlich über die Anschlagscheibe hinausragt. Begrenzt wird der maximale Eintreibweg der Schraube durch den Anschlag des Innenkörpers an der in Eintreibrichtung vorderen Begrenzungswand der Gehäusekammer.

Trotz des im Verhältnis zur Größe des Schraubenkopfes der einzutreibenden Schraube wesentlich größeren Durchmessers der Anschlagscheibe lässt sich der Formschluss zwischen der Antriebskontur des Schraubenkopfes und dem Schrauben-Mitnahmeprofil des Schraubendrehereinsatzes besonders einfach herstellen, wenn sich der Aufnahmeraum von der Vorderseite des Werkzeuggehäuses in Richtung einer ringförmigen Anlagefläche für den Schraubenkopf konisch verjüngt. Der mit Spiel an der Vorderseite in den Aufnahmeraum eingeführte Schraubenkopf zentriert sich durch die Konizität selbst, sodass der Mittelpunkt des Schraubenkopfes auf der Längsachse des Montagewerkzeugs liegt, sobald dieser an der ringförmigen Anlagefläche anliegt. Der Durchmesser des sich konisch verjüngenden Aufnahmeraums entspricht an der ringförmigen Anlagefläche in etwa dem Außendurchmesser des Schraubenkopfes, sodass dieser dort spielfrei formschlüssig aufgenommen und gehalten wird.

Bei nicht getrennter Rutschkupplung rotieren sämtliche Komponenten des Montagewerkzeuges, d.h. die Antriebswelle, der Innenkörper, das Werkzeuggehäuse, die Anschlagscheibe sowie der mit dem Innenkörper verbundene Schraubendrehereinsatz. Zur Vermeidung von Unwuchten sind vorzugsweise sämtliche Elemente des Montagewerkzeugs rotationssymmetrisch, insbesondere weist das Werkzeuggehäuse einen kreiszylindrischen Querschnitt auf und die Gehäusekammer ist als hohlzylindrischer Abschnitt in dem Werkzeuggehäuse ausgestaltet, indem der ebenfalls zylindrische Innenkörper verschieblich, jedoch nicht verdrehbar gelagert ist. Auch der Durchgang zwischen der Gehäusekammer und dem Aufnahmeraum weist vorzugsweise einen kreiszylindrischen Querschnitt auf, dessen Mittelpunkt auf der Längsachse des Montagewerkzeuges liegt.

In konstruktiv vorteilhafter Ausgestaltung ist die Anschlagscheibe lösbar, beispielsweise über Schraubverbindungen an der Vorderseite des Werkzeuggehäuses befestigt. Selbstverständlich liegt es im Rahmen der Erfindung, das Werkzeuggehäuse und die Anschlagscheibe stoffschlüssig miteinander zu verbinden.

Das auf den Innenkörper entgegen der Eintreibrichtung wirksame Federelement lässt sich vorteilhaft in die Gehäusekammer des Werkzeuggehäuses integrieren, wenn das Federelement eine Schraubenfeder ist, die den Schraubendrehereinsatz umgibt und sich endseitig einerseits an dem Innenkörper und andererseits an einer den Durchgang zwischen Gehäusekammer und Aufnahmeraum umgebenen Anlagefläche in der Gehäusekammer abstützt.

Um den Verschiebeweg des Innenkörpers entgegen der Eintreibrichtung zu begrenzen, ist an der offenen Hinterseite der Gehäusekammer eine Axialsicherung, beispielsweise in Form eines Sprengrings angeordnet.

Damit der Innenkörper das über die Antriebswelle eingeleitete Drehmoment auf das Werkzeuggehäuse überträgt, jedoch gleichwohl in der Gehäusekammer verschieblich ist, ist zwischen der Mantelfläche des zylindrischen Innenkörpers und der Gehäusekammer mindestens eine Formschlusskontur angeordnet. Diese Formschlusskontur kann beispielsweise eine parallel zur Längsachse des Montagewerkzeuges verlaufende Nut-Federverbindung sein. In einer vorteilhaften Ausgestaltung der Erfindung kann an der Innenfläche der hohlzylindrischen Gehäusekammer mindestens eine in Richtung der Längsachse des Montagewerkzeuges verlaufende, konkave, rinnenartige Struktur angeordnet sein, die mit einer an der Vorderseite des Innenkörpers angeordneten konvexen Struktur zusammenwirkt. Die konvexe Struktur kann beispielsweise an einem drehfest an dem Außenmantel des Innenkörpers befestigten Ring angeordnet sein.

Wenn das übertragbare Moment der Rutschkupplung einstellbar ist, kann das Trennmoment der Rutschkupplung abhängig von Art und Abmessungen des einzutreibenden Tellerdübels sowie dem Material der Dämmstoffplatte und der Unterkonstruktion derart eingestellt werden, dass die Rutschkupplung genau in dem Augenblick trennt, wenn der Halteteller des Tellerdübels oberflächenbündig mit der Dämmstoffplatte abschließt. Mittels einer stufenlos einstellbaren Rutschkupplung lassen sich daher Dübelabzeichnungen durch nicht einwandfrei oberflächenbündig montierte Tellerdübel wirksam vermeiden.

Eine stufenlos einstellbare Rutschkupplung weist vorzugsweise zwischen dem Außenkörper und dem Nabenteil ein Paket aus Kupplungs- und Reibscheiben auf, wobei wahlweise sämtliche Kupplungsscheiben an einem Außenmantel des Nabenteils und sämtliche Reibscheiben an einer Innenfläche des hohlzylindrischen Außenkörpers oder sämtliche Reibscheiben an dem Außenmantel des Nabenteils und sämtliche Kupplungsscheiben an der Innenfläche des hohlzylindrischen Außenkörpers angeordnet sind. Das übertragbare Drehmoment ist durch verändern der Vorspannkraft in dem Paket aus Kupplungs- und Reibscheiben mit Hilfe einer Stellschraube stufenlos einstellbar, die auf die Kupplungs- beziehungsweise Reibscheiben wirkt.

Nachfolgend wird die Erfindung anhand der Figuren näher erläutert. Es zeigen
- **Figur 1**: eine perspektivische Ansicht eines erfindungsgemäßen Montagewerkzeugs,
- **Figur 2**: eine Explosionsdarstellung eines Montagewerkzeugs und
- **Figur 3A**: einen Schnitt durch das Montagewerkzeug nach Figur 2 in einer Ausgangsposition,
- **Figur 3B**: einen Schnitt durch das Montagewerkzeug nach Figur 2 am Ende eines Eintreibvorgangs einer Schraube.

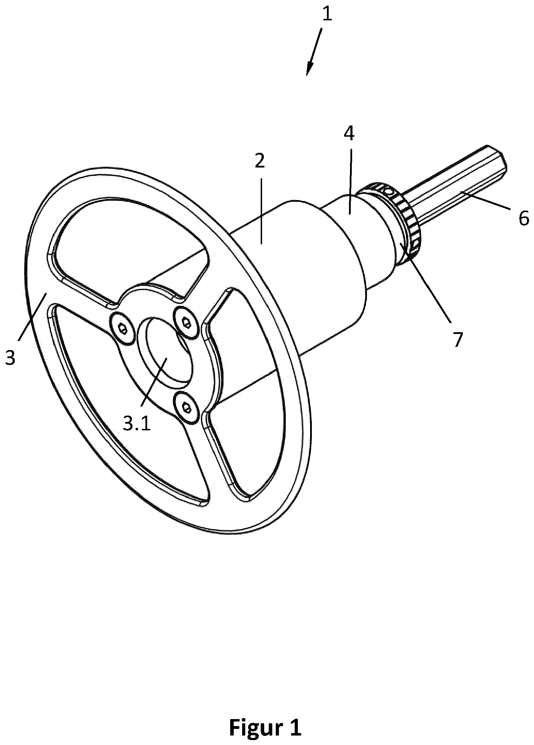

Figur 1 zeigt die Hauptkomponenten des Montagewerkzeuges 1 zum Eintreiben einer nicht dargestellten Schraube in einen Tellerdübel für eine Befestigung einer Dämmstoffplatte an einer Unterkonstruktion. Das Montagewerkzeug umfasst ein Werkzeuggehäuse 2, eine drehfest mit dem Werkzeuggehäuse 2 verbundene Anschlagscheibe 3, einen in Richtung einer Längsachse 4 beweglichen Innenkörper 5, eine Antriebswelle 6 sowie eine zwischen der Antriebswelle 6 und dem Innenkörper 5 angeordnete Rutschkupplung 7.

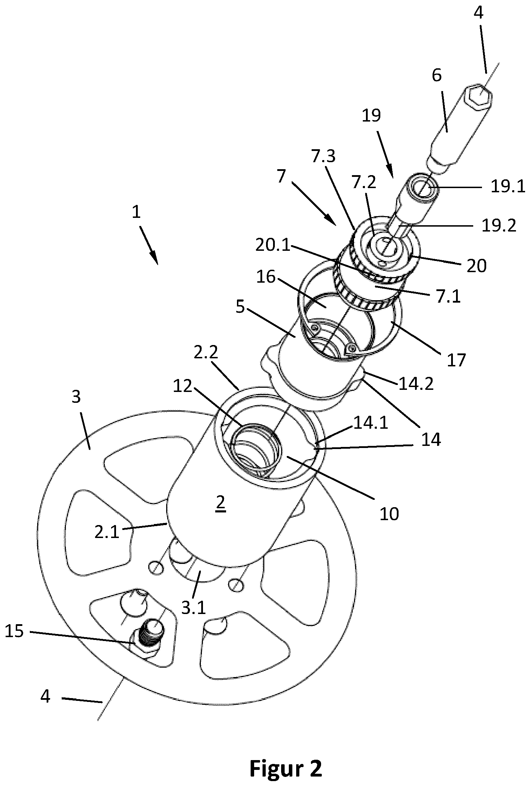

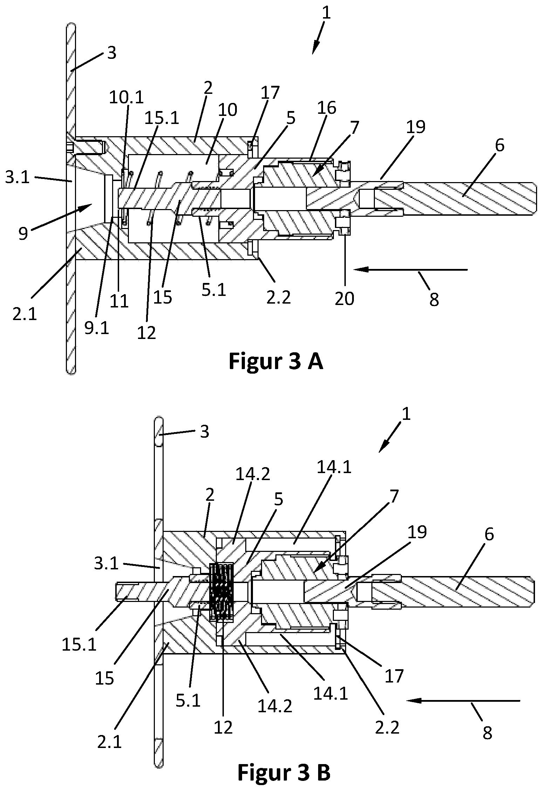

Unter Bezugnahme auf die Figuren 2 und 3 werden nachfolgend die vorgenannten Hauptkomponenten in ihrem Aufbau und der Funktionsweise näher erläutert. Die Eintreibrichtung 8 (vgl. Figuren 3A,3B) der mit dem Montagewerkzeug 1 in den Tellerdübel einzutreibenden Schraube verläuft entlang der Längsachse 4 des Montagewerkzeuges 1 (vgl. Figur 2).

Das kreiszylindrische Werkzeuggehäuse 2 weist einen zu einer Vorderseite 2.1 offenen Aufnahmeraum 9 für einen Schraubenkopf der einzutreibenden Schraube sowie eine zu einer Rückseite 2.2 offene, hohlzylindrische Gehäusekammer 10 und einen Durchgang 11 zwischen dem Aufnahmeraum 9 und der Gehäusekammer 10 auf (vgl. Figuren 3A, 3B). In der Gehäusekammer 10 ist in Eintreibrichtung 8 gegen die Kraft eines als Schraubenfeder ausgestalteten Federelementes 12 der Innenkörper 5 verschieblich, jedoch gegenüber der Gehäusekammer 10 nicht verdrehbar geführt. Hierdurch ist der Innenkörper 5 in der Lage, ein in den Innenkörper 5 eingeleitetes Drehmoment auf das Werkzeuggehäuse 2 zu übertragen.

Die verschiebliche, jedoch nicht verdrehbare Führung des Innenkörpers 5 in der Gehäusekammer 10 wird in dem dargestellten Ausführungsbeispiel durch zusammenwirkende Formschlusskonturen 14 an der Innenfläche der Gehäusekammer 10 und dem Mantel des Innenkörpers 5 realisiert. Die Formschlusskonturen 14 weisen zwei parallel zur Längsachse 4 verlaufende, konkave Vertiefungen 14.1 in der Innenfläche der Gehäusekammer 10 auf, die mit entsprechenden konvexen Strukturen 14.2 am Außenmantel des Innenkörpers 5 zusammenwirken. Die konvexen Strukturen 14.2 sind Bestandteil eines die Mantelfläche des Innenkörpers 5 umgebenden Ringes, der drehfest und axial unverschieblich mit der Mantelfläche des Innenkörpers 5 verbunden ist. Die konvexen Strukturen 14.2 können in den konkaven rinnenartigen Strukturen 14.1 in Richtung der Längsachse 4 gleiten und übertragen das Drehmoment von dem Innenkörper 5 auf das Werkzeuggehäuse 2.

Der Innenkörper 5 weist an seiner Vorderseite einen Stutzen 5.1 mit einem Innengewinde auf, in den das Außengewinde eines Schraubendrehereinsatzes 15 einschraubbar ist (vgl. Figuren 3A, 3B). An dem dem Außengewinde gegenüberliegenden Ende weist der Schraubendrehereinsatz 15 ein Schrauben-Mitnahmeprofil 15.1 auf, das mit einer Antriebskontur der einzutreibenden Schraube in formschlüssige Verbindung bringbar ist. Bei dem Schrauben-Mitnahmeprofil handelt es sich beispielsweise um einen Innensechsrund (auch als Torx bezeichnet), das mit einem Innensechsrund-Kopf in der Schraube zusammenwirkt.

In der in Figur 3A dargestellten Ausgangsstellung des Montagewerkzeuges 1 ragt das Schrauben-Mitnahmeprofil 15.1 des Schraubendrehereinsatzes 15 in den Durchgang 11 hinein, nicht jedoch in den Aufnahmeraum 9 für den Schraubenkopf der Schraube.

Das als Schraubenfeder ausgestaltete Federelement 12 umgibt den Schraubendrehereinsatz 15 und stützt sich endseitig einerseits an dem Innenkörper 5 und andererseits an einer den Durchgang 11 umgebenden Anlagefläche 10.1 in der Gehäusekammer 10 ab.

An der Rückseite des Innenkörpers 5 ist eine als gestuftes Sackloch ausgebildete Höhlung 16 ausgebildet. An der offenen Rückseite 2.2 der Gehäusekammer 10 ist eine Axialsicherung in Form eines Sprengrings angeordnet, der eine Verschiebung des Innenkörpers 5 entgegen der Eintreibrichtung 8 begrenzt.

Die Höhlung 16 in dem Innenkörper 5 ist in Drehmoment übertragender Weise mit einem Außenkörper 7.1 der Rutschkupplung 7 verbunden. Der Außenkörper 7.1 ist in dem Ausführungsbeispiel an einem gerändelten Bereich mit der Innenfläche der Höhlung 16 verklebt. Ein konzentrisch zu dem Außenkörper 7.1 angeordnetes Nabenteil 7.2 der Rutschkupplung ist in Drehmoment übertragender Weise mit der Antriebswelle 6 verbunden. Zwischen dem Außenkörper 7.1 und dem Nabenteil 7.2 ist ein nicht dargestelltes Paket aus Kupplungs- und Reibscheiben angeordnet, wobei die Kupplungsscheiben sämtlich an einem Außenmantel des Nabenteils 7.2 und sämtliche Reibscheiben an einer Innenfläche des hohlzylindrischen Außenkörpers 7.1 befestigt sind.

Zur Einstellung des übertragbaren Drehmoments der Rutschkupplung 7 dient eine in ein Innengewinde in dem Außenkörper 7.1 eingreifende als Einstellring ausgebildete Stellschraube 7.3, die über eine Tellerfeder auf das Paket aus Kupplungs- und Reibscheiben wirkt.

Die Drehmoment übertragende Verbindung zwischen dem Nabenteil 7.2 und der Antriebswelle 6 erfolgt im dargestellten Ausführungsbeispiel über einen zwischengeschalteten, jedoch nicht zwingend erforderlichen Adapter 19, der einseitig ein Innengewinde 19.1 aufweist, in das die Antriebswelle 6 mit einem korrespondierenden Außengewinde einschraubbar ist und der andererseits einen Klemmabschnitt 19.2 aufweist, der mittels Klemmschrauben und zusätzlich einer Verklebung drehfest in einer Durchgangsbohrung des Nabenteils 7.2 gehalten wird. Die Klemmschrauben sind über Zugangsbohrungen 20.1 in der Stellschraube 20 zugänglich.

An dem dem Adapter 19 gegenüberliegenden Ende wird die Antriebswelle 6 in einer Antriebsmaschine, wie beispielsweise einem Schraubendreher, Akkuschrauber, Bohrer oder dergleichen eingespannt.

Wie aus Figuren 3A, 3B erkennbar verjüngt sich der Aufnahmeraum 9 von der Vorderseite in Richtung einer ringförmigen Anlagefläche 9.1, wobei der Durchmesser des Aufnahmeraums 9 an der ringförmigen Anlagefläche 9.1 etwa dem Außendurchmesser des in den Aufnahmeraum 9 eingeführten Schraubenkopfs der einzutreibenden Schraube entspricht. Infolgedessen wird der über die Öffnung 3.1 in der Anschlagscheibe 3 eingeführte Schraubenkopf bei seiner Bewegung in Richtung der ringförmigen Anlagefläche 9.1 automatisch zentriert, sodass der Mittelpunkt des Schraubenkopfes auf der Längsachse 4 des Montagewerkzeuges liegt. Obwohl der Durchmesser der Anschlagscheibe 3 wesentlich größer als der Durchmesser des Schraubenkopfes der einzutreibenden Schraube ist, wird das Ansetzen des Montagewerkzeugs 1 durch die eingeschränkte Sicht nicht behindert, da eine automatische Zentrierung durch den Aufnahmeraum 9 erfolgt.

Nachfolgend wird die Betriebsweise des erfindungsgemäßen Montagewerkzeugs 1 bei der Montage einer Dämmstoffplatte an einer Unterkonstruktion anhand der Figuren 3a, 3b näher erläutert. In den Figuren der Übersichtlichkeit halber nicht dargestellten Dämmstoffplatten werden mit einer Unterkonstruktion, beispielsweise einer Wand verklebt. Sodann werden Bohrlöcher in jede Dämmstoffplatte eingebracht, die sich durch die Dämmstoffplatte bis in die Unterkonstruktion erstrecken. In das Bohrloch werden Tellerdübel eingesetzt, bis die Unterseite des Haltetellers an der Oberfläche der Dämmstoffplatte anliegt. Der Tellerdübel weist einen Halteteller mit einer sich daran anschließenden Dübelhülse auf, die in eine Spreizzone übergeht sowie die in die Dübelhülse einschraubbare Schraube mit dem Schraubenkopf und der Antriebskontur, über die ein Formschluss zu dem Schrauben-Mitnahmeprofil 15.1 des Schraubendrehereinsatzes 15 herstellbar ist.

Durch Einschrauben der Schraube in die Dübelhülse wird die wirksame Länge zwischen der in der Unterkonstruktion verankerten Spreizzone und dem Teller des Tellerdübels reduziert, wodurch die Dämmstoffplatte zwischen der Unterkonstruktion und dem Dübelteller verspannt wird. Die Längenreduktion kann je nach Ausbildung des Tellerdübels durch teilweise Verformung der Dübelhülse oder durch eine Relativbewegung des auf die Dübelhülse lediglich aufgesteckten, in Achsrichtung verschieblichen Dübeltellers erreicht werden.

Beim Ansetzten des mit einer Bohrmaschine verbundenen Montagewerkzeuges 1 wird der Schraubenkopf in dem Aufnahmeraum 9 aufgenommen, bis dieser an der ringförmigen Anlagefläche 9.1 anliegt und zentriert ist. Der Formschluss zwischen der Antriebskontur des aufgenommenen Schraubenkopfes und dem Schrauben-Mitnahmeprofil 15.1 des Schraubendrehereinsatzes 15 wird durch Ausüben eines Anpressdrucks auf die Antriebswelle 6 mittels des Akkuschraubers erreicht. Der Anpressdruck bewirkt, dass das Werkzeuggehäuse 2 relativ zu dem Innenkörper 5 gegen die Kraft des Federelementes 12 verschoben wird und das Schrauben-Mitnahmeprofil 15.1 sich in den Aufnahmeraum 9 bewegt und den Formschluss herstellt. Anschließend wird der Akkuschrauber aktiviert und die Drehbewegung von dem Akkuschrauber auf die Antriebswelle 6, über die Rutschkupplung 7, den Innenkörper 5 auf den Schraubendrehereinsatz 15 übertragen. Mit dem Schraubendrehereinsatz 15 dreht sich das längsverschieblich aber verdrehgesicherte Werkzeuggehäuse 2 und die Anschlagscheibe 3 mit gleicher Umdrehungsgeschwindigkeit mit. Sobald die Anschlagscheibe 3 auf der Oberfläche der Dämmstoffplatte aufsetzt ist ein weiteres Eintreiben der Schraube nur noch möglich, wenn der Innenkörper 5 entgegen der Kraft des Federelementes 12 weiter in Eintreibrichtung 8 in der Gehäusekammer 10 des Werkzeuggehäuses bewegt wird. Hierdurch wird das Schrauben-Mitnahmeprofil 15.1 durch den Aufnahmeraum 9 und die Öffnung 3.1 in der Anschlagscheibe 3 hindurchbewegt und ragt, wie in Figur 3B dargestellt über diese hinaus.

Der Kraftfluss zwischen dem Schrauben-Mitnahmeprofil 15.1 und der Antriebskontur des Schraubenkopfes und damit das Eintreiben der auf den Dübelteller wirkenden Schraube wird unterbrochen, wenn das für das Einreiben der Schraube übertragene Drehmoment sowie das von der Anschlagscheibe 3 zusätzlich ausgeübte Bremsmoment das übertragbare Moment der Rutschkupplung 7 überschreiten.

Mittels der Stellschraube 20 lässt sich das maximal übertragbare Drehmoment der Rutschkupplung 7 vorab derart einstellen, dass die Rutschkupplung 7 trennt, wenn der Halteteller des Tellerdübels exakt oberflächenbündig mit der Dämmstoffplatte abschließt. Hierdurch werden mit dem erfindungsgemäßen Montagetool 1 Dübelabzeichnungen wirksam vermieden.

**Bezugszeichenliste**

| **Nr.** | **Bezeichnung** |
|---|---|
| 1 | Montagewerkzeug |
| 2 | Werkzeuggehäuse |
| 2.1 | Vorderseite |
| 2.2 | Rückseite |
| 3 | Anschlagscheibe |
| 3.1 | Öffnung |
| 4 | Längsachse |
| 5 | Innenkörper |
| 5.1 | Stutzen |
| 6 | Antriebswelle |
| 7 | Rutschkupplung |
| 7.1 | Außenkörper |
| 7.2 | Nabenteil |
| 7.3 | Stellschraube |
| 8 | Eintreibrichtung |
| 9 | Aufnahmeraum |
| 9.1 | ringförmige Anlagefläche |
| 10 | Gehäusekammer |
| 10.1 | Anlagefläche |
| 11 | Durchgang |
| 12 | Federelement |
| 14 | Formschlusskonturen |
| 14.1 | konkave Strukturen |
| 14.2 | konvexe Strukturen |
| 15 | Schraubendrehereinsatz |
| 15.1 | Schrauben-Mitnahmeprofil |
| 16 | Höhlung |
| 17 | Axialsicherung |
| 18 | - |
| 19 | Adapter |
| 19.1 | Innengewinde |
| 19.2 | Klemmabschnitt |
| 20 | Stellschraube |
| 20.1 | Zugangsbohrung |

## Patentansprüche

1. Montagewerkzeug (1) mit einer Längsachse (4) zum Eintreiben einer Schraube in einen Tellerdübel für eine Befestigung einer Dämmstoffplatte an einer Unterkonstruktion, umfassend
- ein Werkzeuggehäuse (2) mit einer Vorderseite (2.1) und einer Rückseite (2.2), mit einem zur Vorderseite (2.2) offenen Aufnahmeraum (9) zur Führung des Schraubenkopfs der einzutreibenden Schraube, einer zur Rückseite (2.2) offenen Gehäusekammer (10) und einem Durchgang (11) zwischen dem Aufnahmeraum (9) und der Gehäusekammer(10),
- eine an der Vorderseite des Werkzeuggehäuses (2) drehfest angeordnete Anschlagscheibe (3) mit einer den Aufnahmeraum (9) freigebenden Öffnung (3.1),
- einen in der Gehäusekammer (10) in Eintreibrichtung (8) gegen die Kraft eines Federelementes (12) verschieblichen, jedoch gegenüber der Gehäusekammer (10) nicht verdrehbaren Innenkörper(5),
- einen an einer Vorderseite des Innenkörpers (5) befestigten Schraubendrehereinsatz (15) mit einem Schrauben-Mitnahmeprofil (15.1), wobei das Schrauben-Mitnahmeprofil (15.1) durch den Durchgang (11), den Aufnahmeraum (9) und die Öffnung (3.1) in der Anschlagscheibe (3) hindurch bewegbar ist,
- eine an einer Rückseite des Innenkörpers (5) angeordnete Höhlung (16),
- eine mit einer Antriebsmaschine verbindbare Antriebswelle (6),
- eine zwischen der Antriebswelle (6) und dem Innenkörper (5) angeordnete Rutschkupplung (7) mit einem Außenkörper (7.1) und einem Nabenteil (7.2), wobei der Außenkörper (7.1) in der Höhlung (16) des Innenkörpers und das Nabenteil (7.2) an der Antriebswelle (6) befestigt ist.

2. Montagewerkzeug nach Anspruch 1, **dadurch gekennzeichnet, dass** sich der Aufnahmeraum (9) von der Vorderseite in Richtung einer ringförmigen Anlagefläche (9.1) für den aufzunehmenden Schraubenkopf konisch verjüngt.

3. Montagewerkzeug nach Anspruch 2, **dadurch gekennzeichnet, dass** der Durchmesser des Aufnahmeraums (9) an der ringförmigen Anlagefläche (9.1) dem Außendurchmesser des aufzunehmenden Schraubenkopfs entspricht.

4. Montagewerkzeug nach einem der Ansprüche 1 bis 3, **dadurch gekennzeichnet, dass** das Werkzeuggehäuse (2) einen kreiszylindrischen Querschnitt aufweist und die Gehäusekammer (10) als hohlzylindrischer Abschnitt in dem Werkzeuggehäuse (2) ausgestaltet ist.

5. Montagewerkzeug nach Anspruch 4, **dadurch gekennzeichnet, dass** der Durchgang (11) einen kreiszylindrischen Querschnitt aufweist, dessen Mittelpunkt auf der Längsachse (4) des Montagewerkzeugs liegt.

6. Montagewerkzeug nach einem der Ansprüche 1 bis 5, **dadurch gekennzeichnet, dass** die Anschlagscheibe (3) lösbar an der Vorderseite des Werkzeuggehäuses (2) befestigt ist.

7. Montagewerkzeug nach einem der Ansprüche 1 bis 6, **dadurch gekennzeichnet, dass** das Federelement (12) eine Schraubenfeder ist, die den Schraubendrehereinsatz (15) umgibt und sich endseitig einerseits an dem Innenkörper (5) und andererseits an einer den Durchgang (11) umgebenden Anlagefläche (10.1) in der Gehäusekammer (10) abstützt.

8. Montagewerkzeug nach einem der Ansprüche 4 bis 7, **dadurch gekennzeichnet, dass** zwischen der Mantelfläche des zylindrischen Innenkörpers (5) und der hohlzylindrischen Gehäusekammer (10) mindestens eine eine Drehung des Innenkörpers (5) in der Gehäusekammer (10) unterbindende, jedoch eine Verschiebung in Richtung der Längsachse (4) erlaubende Formschlusskontur (14) angeordnet ist.

9. Montagewerkzeug nach einem der Ansprüche 1 bis 8, **dadurch gekennzeichnet, dass** eine an der offenen Rückseite der Gehäusekammer (10) angeordnete Axialsicherung (17) den Verschiebeweg des Innenkörpers (5) entgegen der Eintreibrichtung (8) begrenzt.

10. Montagewerkzeug nach einem der Ansprüche 1 bis 9, **dadurch gekennzeichnet, dass** das Nabenteil (7.2) und der Außenkörper (7.1) der Rutschkupplung (7) konzentrisch zueinander angeordnet sind.

11. Montagewerkzeug nach einem der Ansprüche 1 bis 10,
**dadurch gekennzeichnet, dass** das mit der Rutschkupplung (7) übertragbare Drehmoment einstellbar ist.

12. Montagewerkzeug nach einem der Ansprüche 1 bis 11,
**dadurch gekennzeichnet, dass** zwischen dem Außenkörper (7.1) und dem Nabenteil (7.2) abwechselnd Kupplungs- und Reibscheiben angeordnet sind, wobei wahlweise sämtliche Kupplungsscheiben an einem Außenmantel des Nabenteils (7.2) und sämtliche Reibscheiben an einer Innenfläche des hohlzylindrischen Außenkörpers (7.1) oder sämtliche Reibscheiben an dem Außenmantel des Nabenteils (7.2) und sämtliche Kupplungsscheiben an der Innenfläche des hohlzylindrischen Außenkörpers (7.1) angeordnet sind.

13. Montagewerkzeug nach Anspruch 12, **dadurch gekennzeichnet, dass** das übertragbare Drehmoment der Rutschkupplung (7) durch Verändern der Vorspannkraft in dem Paket aus Kupplungs- und Reibscheiben mit Hilfe einer Stellschraube (20) stufenlos einstellbar ist.

14. Verfahren zur Montage einer Dämmstoffplatte an einer Unterkonstruktion mit Hilfe eines Montagewerkzeugs nach einem der Ansprüche 1 bis 13, wobei das Verfahren folgende Schritte aufweist:
- Bereithalten eines Tellerdübels mit einem Halteteller und einer sich daran anschließenden Dübelhülse, die in eine Spreizzone übergeht sowie eine in die Dübelhülse einschraubbare Schraube mit einem Schraubenkopf mit einer Antriebskontur, über die ein Formschluss zu dem Schrauben-Mitnahmeprofil (15.1) des Schraubendreheinsatzes (15) des Montagewerkzeugs (1) herstellbar ist,
- Verbinden der Antriebswelle (6) des Montagewerkzeuges (1) mit der Antriebsmaschine,
- Bohren eines Bohrlochs, das sich durch die Dämmstoffplatte bis in die Unterkonstruktion erstreckt,
- Einsetzen des Tellerdübels in das Bohrloch,
- teilweises Einführen der Schraube in die Dübelhülse,
- Ansetzen des Montagewerkzeugs (1), wobei zumindest der Schraubenkopf in dem Aufnahmeraum (9) aufgenommen wird,
- Herstellen des Formschlusses zwischen der Antriebskontur des in dem Aufnahmeraum (9) aufgenommenen Schraubenkopfs und dem Schrauben-Mitnahmeprofil (15.1) des Schraubendreheinsatzes (15) durch Ausüben eines Anpressdrucks auf die Antriebswelle (6) in Eintreibrichtung (8) derart, dass das Werkzeuggehäuse (2) relativ zu dem Innenkörper (5) gegen die Kraft des Federelementes (12) verschoben wird und das Schrauben-Mitnahmeprofil (15.1) sich in den Aufnahmeraum (9) hinein bewegt und den Formschluss herstellt,
- anschließendes Übertragen einer Drehbewegung von der Antriebsmaschine auf die Antriebswelle (6) des Montagewerkzeugs (1) und damit auf die in die Dübelhülse einzutreibende Schraube,
- wobei die Drehbewegung solange übertragen wird, bis die gemeinsam mit dem Schraubendrehereinsatz (15) drehende Anschlagscheibe (3) des Montagewerkzeugs (1) auf der Oberfläche der Dämmstoffplatte aufsetzt und nach dem vollständigen Eintreiben der Schraube die Rutschkupplung trennt.

15. Verfahren nach Anspruch 14 mit Hilfe eines Montagewerkzeugs nach einem der Ansprüche 11 oder 13, wobei das Verfahren vor dem Schritt des Übertragens einer Drehbewegung von der Antriebsmaschine auf die Antriebswelle des Montagewerkzeugs zusätzlich folgenden Schritt aufweist:
- Einstellen des übertragbaren Drehmoments der Rutschkupplung derart, dass die Rutschkupplung trennt, wenn der Halteteller des Tellerdübels oberflächenbündig mit der Dämmstoffplatte abschließt.

## Claims

1. Assembly tool (1) having a longitudinal axis (4) for driving a screw into a plate dowel for fastening an insulating panel to a substructure, comprising
- a tool housing (2) comprising a front side (2.1) and a rear side (2.2) with a receiving space (9) which is open towards the front side (2.2) for guiding the screw head of the screw to be driven in, a housing chamber (10) which is open towards the rear side (2.2) and a passage (11) between the receiving space (9) and the housing chamber (10),
- a stop disk (3) arranged in a rotationally fixed manner on the front side of the tool housing (2) with an opening (3.1) which exposes the receiving space (9),
- an inner body (5) which is displaceable in the housing chamber (10) in the driving-in direction (8) against the force of a spring element (12) but which is not twistable with respect to the housing chamber (10),
- a screwdriver insert (15) fastened to a front side of the inner body (5) with a screw entraining profile (15.1), wherein the screw entraining profile (15.1) can be moved through the passage (11), the receiving space (9) and the opening (3.1) in the stop disk (3),
- a cavity (16) arranged on a rear side of the inner body (5),
- a drive shaft (5) which can be connected to a drive machine,
- a sliding clutch (7) arranged between the drive shaft (6) and the inner body (5) having an outer body (7.1) and a hub part (7.2), wherein the outer body (7.1) is fastened in the cavity (16) of the inner body and the hub part (7.2) is fastened to the drive shaft (6).

2. Assembly tool according to Claim 1, **characterized in that** the receiving space (9) tapers conically from the front side in the direction of an annular stop surface (9.1) for the screw head to be received.

3. Assembly tool according to Claim 2, **characterized in that** the diameter of the receiving space (9) on the annular stop surface (9.1) corresponds to the outside diameter of the screw head to be received.

4. Assembly tool according to one of Claims 1 to 3, **characterized in that** the tool housing (2) has a circular cylindrical cross-section and the housing chamber (10) is configured as a hollow-cylindrical section in the tool housing (2).

5. Assembly tool according to Claim 4, **characterized in that** the passage (11) has a circular-cylindrical cross-section whose midpoint lies on the longitudinal axis (4) of the assembly tool.

6. Assembly tool according to one of Claims 1 to 5, **characterized in that** the stop disk (3) is fastened detachably to the front side of the tool housing (2).

7. Assembly tool according to one of Claims 1 to 6, **characterized in that** the spring element (12) is a helical spring which surrounds the screwdriver insert (15) and is supported at the end on one side on the inner body (5) and on the other side on a stop surface (10.1) surrounding the passage (11) in the housing chamber (10).

8. Assembly tool according to one of Claims 4 to 7, **characterized in that** at least one form-fitting contour (14) which prevents any rotation of the inner body (5) in the housing chamber (10) but allows a displacement in the direction of the longitudinal axis (4) is arranged between the lateral surface of the cylindrical inner body (5) and the hollow-cylindrical housing chamber (10).

9. Assembly tool according to one of Claims 1 to 8, **characterized in that** an axial securing device (17) arranged on the open rear side of the housing chamber (10) delimits the displacement path of the inner body (5) towards the driving-in direction (8).

10. Assembly tool according to one of Claims 1 to 9, **characterized in that** the hub part (7.2) and the outer body (7.1) of the sliding clutch (7) are arranged concentrically with respect to one another.

11. Assembly tool according to one of Claims 1 to 10, **characterized in that** the torque which can be transferred with the sliding clutch (7) is adjustable.

12. Assembly tool according to one of Claims 1 to 11, **characterized in that** clutch and friction disks are arranged alternately between the outer body (7.1) and the hub part (7.2), wherein all the clutch disks are arranged on an outer jacket of the hub part (7.2) and all the friction disks are arranged on an inner surface of the hollow-cylindrical outer body (7.1) or all the friction disks are arranged on the outer jacket of the hub part (7.2) and all the clutch disks are arranged on the inner surface of the hollow-cylindrical outer body (7.1).

13. Assembly tool according to Claim 12, **characterized in that** the transferrable torque of the sliding clutch (7) can be adjusted smoothly by varying the pretensioning force in the package of clutch and friction disks with the aid of an adjusting screw (20).

14. Method for mounting an insulating panel on a substructure with the aid of an assembly tool according to one of Claims 1 to 13, wherein the method comprises the following steps:
- providing a plate dowel with a retaining plate and an adjoining dowel sleeve which goes over into a spread zone and a screw which can be screwed into the dowel sleeve having a screw head with a drive contour by means of which a form fit to the screw entraining profile (15.1) of the screwdriver insert (15) of the assembly tool (1) can be produced,
- connecting the drive shaft (6) of the assembly tool (1) to the drive machine,
- drilling a drill hole that extends through the insulating panel as far as into the substructure,
- inserting the plate dowel into the drill hole,
- partially inserting the screw into the dowel sleeve,
- placement of the assembly tool (1) wherein at least the screw head is received in the receiving space (9),
- producing the form fit between the drive contour of the screw head received in the receiving space (9) and the screw entraining profile (15.1) of the screwdriver insert (15) by applying a contact pressure to the drive shaft (6) in the driving-in direction (8) in such a manner that the tool housing (2) is displaced relative to the inner body (5) against the force of the spring element (12) and the screw entraining profile (15.1) moves into the receiving space (9) and produces the form fit,
- subsequently transferring a rotational movement from the drive machine to the drive shaft (6) of the assembly tool (1) and thus to the screw to be driven into the dowel sleeve,
- wherein the rotational movement is transferred until the stop disk (3) of the assembly tool (1) rotating jointly with the screwdriver insert (15) sits on the surface of the insulating panel and separates the sliding clutch after completely driving in the screw.

15. Method according to Claim 14 with the aid of an assembly tool according to one of Claims 11 or 13, wherein before the step of transferring a rotational movement from the drive machine to the drive shaft of the assembly tool the method additionally comprises the following step:
- adjusting the transferrable torque of the sliding clutch in such a manner that the sliding clutch separates when the retaining plate of the plate dowel terminates with the insulating panel in a surface-flush manner.

## Revendications

1. Outil de montage (1), doté d'un axe longitudinal (4), destiné à enfoncer une vis dans une cheville à collerette, pour fixer un panneau isolant sur une substructure, comprenant
- un corps d'outil (2), pourvu d'une face avant (2.1) et d'une face arrière (2.2), avec un espace de logement (9) ouvert sur la face avant (2.2), destiné à guider la tête de vis de la vis qui doit être enfoncée, d'une chambre de corps (10) ouverte sur la face arrière (2.2) et d'un passage (11) entre l'espace de logement (9) et la chambre de corps(10),
- une rondelle de butée (3), placée de manière solidaire en rotation sur la face avant du corps d'outil (2), pourvue d'un orifice (3.1) libérant l'espace de logement (9),
- un organe intérieur (5), déplaçable dans la chambre de corps (10), dans la direction d'enfoncement (8), à l'encontre de la force d'un élément à ressort (12), toutefois non rotatif par rapport à la chambre de corps (10),
- un embout de tournevis (15), fixé sur la face avant de l'organe intérieur (5), pourvu d'un profil d'entraînement de vis (15.1), le profil d'entraînement de vis (15.1) étant mobile à travers le passage (11), l'espace de logement (9) et l'orifice (3.1) en traversant la rondelle de butée (3),
- une cavité (16), placée sur la face arrière de l'organe intérieur (5),
- un arbre d'entraînement (6), susceptible d'être relié avec un mécanisme d'entraînement,
- un accouplement à glissement (7), placé entre l'arbre d'entraînement (6) et l'organe intérieur (5), pourvu d'un organe extérieur (7.1) et d'une partie formant moyeu (7.2), l'organe extérieur (7.1) étant fixé dans la cavité (16) de l'organe intérieur et la partie formant moyeu (7.2) étant fixée sur l'arbre d'entraînement (6).

2. Outil de montage selon la revendication 1, **caractérisé en ce que** l'espace de logement (9) s'effile en cône de la face avant, dans la direction d'une surface d'appui (9.1) de forme annulaire, pour la tête de vis qui doit être logée.

3. Outil de montage selon la revendication 2, **caractérisé en ce que** le diamètre de l'espace de logement (9) sur la surface d'appui (9.1) de forme annulaire correspond à la tête de vis qui doit être logée.

4. Outil de montage selon l'une quelconque des revendications 1 à 3, **caractérisé en ce que** le corps d'outil (2) présente une section transversale de forme cylindrique circulaire et **en ce que** la chambre de corps (10) est conçue sous la forme d'un tronçon cylindrique creux dans le corps d'outil (2).

5. Outil de montage selon la revendication 4, **caractérisé en ce que** le passage (11) présente une section transversale de forme cylindrique circulaire, dont le point médian se situe sur l'axe longitudinal (4) de l'outil de montage.

6. Outil de montage selon l'une quelconque des revendications 1 à 5, **caractérisé en ce que** la rondelle de butée (3) est fixée de manière amovible sur la face avant du corps d'outil (2).

7. Outil de montage selon l'une quelconque des revendications 1 à 6, **caractérisé en ce que** l'élément à ressort (12) est un ressort hélicoïdal, qui entoure l'embout de tournevis (15) et qui par ses extrémités, s'appuie d'une part sur l'organe intérieur (5) et d'autre part sur une surface d'appui (10.1) entourant le passage (11) dans la chambre de corps (10).

8. Outil de montage selon l'une quelconque des revendications 4 à 7, **caractérisé en ce qu'**entre la surface d'enveloppe de l'organe intérieur (5) cylindrique et la chambre de corps (10) en forme de cylindre creux est placé au moins un contour (14) de complémentarité de forme empêchant une rotation de l'organe intérieur (5) dans la chambre de corps (10), permettant toutefois un déplacement dans la direction de l'axe longitudinal (4).

9. Outil de montage selon l'une quelconque des revendications 1 à 8, **caractérisé en ce qu'**un blocage axial (17), placé sur la face arrière ouverte de la chambre de corps (10) délimite la course de déplacement de l'organe intérieur (5) à l'encontre de la direction d'enfoncement (8).

10. Outil de montage selon l'une quelconque des revendications 1 à 9, **caractérisé en ce que** la partie formant moyeu (7.2) et l'organe extérieur (7.1) de l'accouplement à glissement (7) sont placés de manière concentrique, l'un par rapport à l'autre.

11. Outil de montage selon l'une quelconque des revendications 1 à 10, **caractérisé en ce que** le couple de rotation transmissible par l'accouplement à glissement (7) est réglable.

12. Outil de montage selon l'une quelconque des revendications 1 à 11, **caractérisé en ce qu'**entre l'organe extérieur (7.1) et la partie formant moyeu (7.2) sont placés en alternance des disques d'accouplement et des disques de friction, sélectivement, tous les disques d'accouplement étant placés sur une enveloppe extérieure de la partie formant moyeu (7.2) et tous les disques de friction étant placés sur une surface intérieure de l'organe extérieur (7.1) en forme de cylindre creux ou tous les disques de friction étant placés sur l'enveloppe extérieure de la partie formant moyeu (7.2) et tous les disques d'accouplement étant placés sur la surface intérieure de l'organe extérieur (7.1) en forme de cylindre creux.

13. Outil de montage selon la revendication 12, **caractérisé en ce que** le couple transmissible de l'accouplement à glissement (7) est réglable en continu par variation de la force de précontrainte dans le pack de disques d'accouplement et de disques de friction, à l'aide d'une vis de réglage (20).

14. Procédé, destiné à monter un panneau isolant sur une substructure à l'aide d'un outil de montage selon l'une quelconque des revendications 1 à 13, le procédé comportant les étapes suivantes consistant à :
- mettre à disposition une cheville à collerette, avec une rondelle d'arrêt et une gaine de cheville s'y raccordant, qui surmonte une zone d'expansion, ainsi qu'une vis susceptible d'être vissée dans la gaine de cheville, dotée d'une tête de vis avec un contour d'entraînement, par l'intermédiaire duquel il est possible d'établir une complémentarité de forme avec le profil d'entraînement de vis (15.1) de l'embout de visseuse (15) de l'outil de montage (1),
- relier l'arbre d'entraînement (6) de l'outil de montage (1) avec le mécanisme d'entraînement,
- percer un trou, qui s'étend à travers le panneau isolant jusque dans la substructure,
- insérer la cheville à collerette dans le trou,
- introduire partiellement la vis dans la gaine de cheville,
- mettre en prise l'outil de montage (1), au moins la tête de vis se logeant dans l'espace de logement (9),
- établir la complémentarité de forme entre le contour d'entraînement de la tête de vis logée dans l'espace de logement (9) et le profil d'entraînement de la vis (15.1) de l'embout de visseuse (15), en exerçant une pression de contact sur l'arbre d'entraînement (6) dans la direction d'enfoncement (8), de telle sorte que le corps d'outil (2) soit déplacé par rapport à l'organe intérieur (5) à l'encontre de la force de l'élément à ressort (12) et que le profil d'entraînement de vis (15.1) bouge à l'intérieur de l'espace de logement (9) et établisse la complémentarité de forme,
- transmettre ensuite un mouvement de rotation du mécanisme d'entraînement sur l'arbre d'entraînement (6) de l'outil de montage (1) et donc sur la vis qui doit être enfoncée dans la gaine de cheville,
- le mouvement de rotation étant transmis jusqu'à ce que la rondelle de butée (3) de l'outil de montage (1) tournant conjointement avec l'embout de tournevis (15) s'applique sur la surface du panneau isolant et après l'enfoncement complet de la vis, désolidarise l'accouplement à glissement.

15. Procédé selon la revendication 14, à l'aide d'un outil de montage selon l'une quelconque des revendications 11 ou 13, avant l'étape de la transmission d'un mouvement de rotation du mécanisme d'entraînement sur l'arbre d'entraînement de l'outil de montage, le procédé comportant additionnellement l'étape suivante, consistant à :
- régler le couple de rotation transmissible de l'accouplement à glissement, de telle sorte que l'accouplement à glissement se désolidarise lorsque la rondelle d'arrêt de la cheville à collerette se termine à fleur de la surface du panneau isolant.
